# EUROPEAN PATENT APPLICATION

(11) **EP 2 587 052 A1**
(43) Date of publication of application: **01.05.2013**
(21) Application number: 11186535.8
(22) Date of filing: 25.10.2011
(51) Int. Cl.: F03D 11/00, F03D 1/06

(54) **Wind turbine with cooling system**

(71) Applicant: EWT IP B.V., 3821 AA Amersfoort (NL)
(72) Inventor: Smeenk, Coenraad Louis, 3511 NN Utrecht (NL); Van Den Brink, Alfred, 3821 AA Amersfoort (NL)
(74) Representative: Swinkels, Bart Willem

(57) **Abstract**

Cooling system for wind turbine with a stator part (2) and a rotor part (3), the rotor part (3) in operation rotating with respect to the stator part (2). The stator part (2) comprises generator stator components (5), and the rotor part (3) comprises a cooling air channel (6) having at least one cooling aperture (7) in fluid communication with the generator stator components (5) in the stator part (2).

## Description

### Field of the invention

The present invention relates to cooling system for a wind turbine, comprising a stator part and a rotor part, wherein the rotor part is rotating with respect to the stator part in operation, and wherein the stator part comprises generator stator components, and the rotor part comprises generator rotor components.

### Prior art

Wind turbines are becoming larger and larger in capacity, putting up more and more requirements for cooling of certain parts of the wind turbine, especially the generator components. Cooling systems may be quite bulky, and are usually provided in a fixed part of the wind turbine static structure (also for ease of power supply).

International patent publication WO2010/079638 discloses a wind driven generator, wherein in the nacelle a cooling system is provided. This cooling system provides cooling capacity for the components in the nacelle, such as the gear box and power generator. Additionally, cooled air is drawn into or blown into a cover of a rotor head to cool components located in the rotor head.

### Summary of the invention

The present invention seeks to provide an efficient and effective cooling system for parts of a wind turbine system of the direct drive type which heat up during operation.

According to the present invention, a cooling system according to the preamble defined above is provided, wherein the cooling system is provided in the stator part and the rotor part of the wind turbine, the rotor part comprises a cooling air channel having at least one cooling aperture in fluid communication with the generator stator components in the stator part. The cooling system in such an arrangement is very effective in many aspects, including use of available space.

In an embodiment the cooling air channel forms a closed air circulation circuit, and the cooling air channel has at least one inlet aperture for allowing air to flow between the stator part and the rotor part. This allows a sufficient flow of cooling air, without requiring additional equipment such as filters and other conditioning equipment needed when using outside air.

The inlet aperture is provided in a further embodiment by a central opening between the stator part and rotor part, e.g. delimited by the bearing and sealing between the stator part and the rotor part.

The generator stator components comprise stator coil elements, e.g. winding packets or stacked coils. During operation, these elements warm up, and the present invention allows adequate cooling thereof.

In a further embodiment the rotor part comprises a cooling fan for circulating air in the cooling air channel. The cooling fan can force an air stream through the cooling air channel, either by sucking or blowing.

The cooling fan is positioned in a blade of the rotor part in a further embodiment, making efficient use of available space in the wind turbine. Alternatively, each blade of the wind turbine comprises a cooling fan and associated air duct parts.

In one embodiment, the cooling air channel is formed as an integral part of housing elements of the rotor part. Alternatively, the cooling air channel is formed as an extending part to the housing elements of the rotor part.

In a further embodiment the cooling air channel comprises a radiator element which allows additional and even more effective cooling of the air in the cooling air channel..

A blade of the wind turbine is provided with a separator element in a further group of embodiment, creating an elongated cooling channel part over a predetermined length of the blade. Thus, an even further enhanced effectiveness of the cooling system is obtained, by creating a larger heat exchange surface. The separator element may be a structural part of the blade (shear web), or alternatively the separator element may be a non-reinforcing separator element implemented using a light weight material (e.g. a cloth or web material).

The cooling fan may be supplied with power from an external source, or alternatively from an auxiliary power unit positioned inside the rotor part.

To even further enhance the effectiveness of the cooling system the stator part is provided with a heat exhaust in an even further embodiment.

### Short description of drawings

The present invention will be discussed in more detail below, using a number of exemplary embodiments, with reference to the attached drawings, in which
Fig. 1 shows a cross sectional view of the top of a wind turbine, wherein an embodiment of the cooling system according to the present invention is implemented;
Fig. 2 shows a cross sectional view in perspective of a wind turbine blade used in a further embodiment of the present invention.

### Detailed description of exemplary embodiments

Wind turbines are growing bigger and bigger in capacity. The electrical generators involved are also becoming larger, resulting in more demanding requirements with respect to cooling of e.g. the generator parts of the wind turbine. Most wind turbines of present day designs are equipped with a fixed cooling system, usually housed in the stationary parts of the wind turbine (tower or nacelle on top of tower), and usually comprise cooling systems using techniques known as such, such as water cooling.

According to the present invention embodiment, improvements are provided for enhancing the cooling capabilities of a wind turbine in an effective and efficient manner.

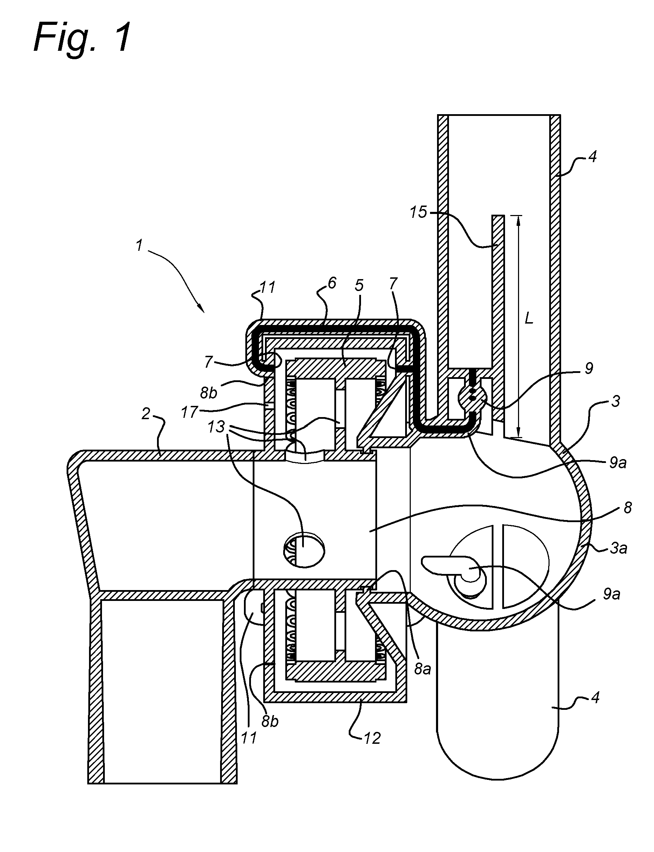

Fig. 1 shows a cross sectional view of the relevant part of a wind turbine 1. Major components are constituted by a stator part 2 (providing space and structural support for generator stator components 5, such as the stator coil elements) and a rotor part 3 (in general a hub 3a with a number of blades 4, in the embodiments shown three blades 4 are provided). The rotor part 3 is attached to the stator part 2 using e.g. a bearing 8a, and comprises a rotor housing 12 which envelopes the stator part 2. The structure shown is typical for a direct drive wind turbine, where no transmission or gear is present between the rotating parts of the wind turbine 1 and the static parts. The rotor housing 12 envelopes the stator part 2, and is sealed at the rotor blade side by bearing 8a, and at the other side by sealing 8b.

In accordance with a general embodiment of the present invention, a cooling system for a wind turbine 1 is provided, comprising a stator part 2 and a rotor part 3, the rotor part 3 in operation rotating with respect to the stator part 2, wherein the stator part 2 comprises generator stator components 5, and the rotor part 3 comprises a cooling air channel 6 having at least one cooling aperture 7 in fluid communication with the generator stator components 5 in the stator part 2.

In one embodiment, the cooling air channel 6 forms a closed air circulation circuit, and the cooling air channel 6 has at least one inlet aperture 8 for allowing air to flow between the stator part 2 and the rotor part 3. The closed air circulation circuit allows efficient control of the air flow and cooling performance of the cooling system. As an example, which is also shown in the embodiment of Fig. 1, the inlet aperture 8 is provided by a central opening between the stator part 2 and rotor part 3, e.g. delimited by the bearing and sealing structure 8a between the stator part 2 and rotor part 3 in the direct drive wind turbine 1 as shown. This central opening is already available, and thus implementation of the cooling system according to this embodiment is easy to implement in existing direct drive wind turbine designs.

In the embodiment shown, the generator stator components 5 which can be cooled by the cooling system comprise stator coil elements 5, such as winding packets, stacked coils, etc., provided at a fixed radial distance from a center line of the stator part 2. The cooling apertures 7 are aligned with these stator coil elements 5 to provide an efficient a cooling as possible. The stator coil elements 5 (or in general the generator stator components 5) may be provided with their own cooling air channels to allow a more efficient contact between the cooling air and the warm generator stator components 5. Furthermore, the stator part 2 and/or rotor part 3 may be provided with additional cooling air channels, guiding elements or apertures to help guide the cooling air efficiently.

In further embodiments, the rotor part 3 comprises a cooling fan 9 for circulating air in the cooling air channel 6. The cooling fan 9 may be arranged for forcing air in either directions in the cooling air channel 6 (i.e. suck or blow). The cooling fan 9 can be positioned anywhere in the cooling air channel 6, e.g. in a central part of a hub 3a of the rotor part 3, or in the stator part 2. Alternatively, the cooling fan 9 may be positioned in a blade 4 of the rotor part 3, or even each blade 4 of the wind turbine 1 may comprise a cooling fan 9 and associated air duct parts 9a.

Thus cooling fan(s) 9 responsible for blowing or sucking away hot air from the generator stator components 5, is/are mounted on the (outer-) rotor part 3. The cooling system comprises at least one cooling fan 9 (or blower), which is an electrically powered device that moves air from one place to another. The cooling fan 9 is either directly mounted on the rotor part 3 (on the part of the rotor housing 12 directly in the vicinity of the generator stator components 5 in the stator part 5) or the cooling fan 9 is mounted in- or onto the hub 3 a or blades 4 of the wind turbine 1. The latter version comprises an air-duct part 9a in between the cooling fan 9 and the spot inside (the generator section of) the rotor part 3 where air suction or discharge is desired (i.e. at the cooling apertures 7 as indicated in Fig. 1 for that embodiment).

The cooling air channel 6 is formed as an integral part of housing elements 12 of the rotor part 3 in a further embodiment, which provides a 'normal' appearance of the wind turbine. Alternatively, the cooling air channel 6 is formed as an extending part 11 to the housing elements 12 of the rotor part 3, which e.g. results in the visible ducts 11 (see the embodiment shown in Fig. 1) on the generator section of the rotor part 3. When e.g. using a single cooling fan 9 positioned in the nacelle of the stator part 2 or hub 3a of the rotor part, additional ducts may also be provided on the outside of the nacelle 2 or hub 3a, which can make the presence of the cooling system very clear and distinct from other wind turbine designs.

In an even further embodiment, the cooling air channel 6 comprises a radiator element, possibly visible on the outside of the wind turbine. The radiator element can then provide for additional cooling of the air inside the cooling air channel 6, and may e.g. be positioned on the hub 3a, or on the generator section of the rotor part 3. Furthermore, the radiator element may also be positioned closer to the stator part 2 (e.g. in the ducts 11 of the embodiment shown in Fig. 1), or even in the stator part 2.

In a further group of embodiment, the radiator element is formed by one or more of the blades 4 from the wind turbine. When hot air (for instance air that is sucked from the stator part 2) is being led through (part of) the turbine blade 4, the hot air can get rid of excessive heat through conduction to the blade wall and radiation from the blade to the outside environment. The material and thickness of the blades 4 would allow for a sufficient cooling capacity for most applications. When heat (produced by for instance the direct drive generator of the wind turbine 1 or other heat sources like pitch motors in the rotor part 3) is led into the turbine blades 4 (either by means of an electrically induced air stream or even induced by a natural air stream), the direct surrounding of the heat source will have an under-pressure that will attract fresh air from the internal space of the blades 4. This way, the total volume of air that will be heated is significantly enlarged. This means, that a greater volume of air must be heated up before the air temperature reaches a level that is critical for well functioning of the component acting as heat source. In other words: the component acting as heat source can be operated for longer time before it will overheat (if ever). The hot air will be led passed a very large surface that will act as a heat sink to the outside environment of the wind turbine 1. Not only is this heat sink very large, it is also moving through the outside air with great speed (on top of the wind speed that is already present), which will significantly increase radiation to the outside air, because the air surrounding the blade 4 is constantly refreshed.

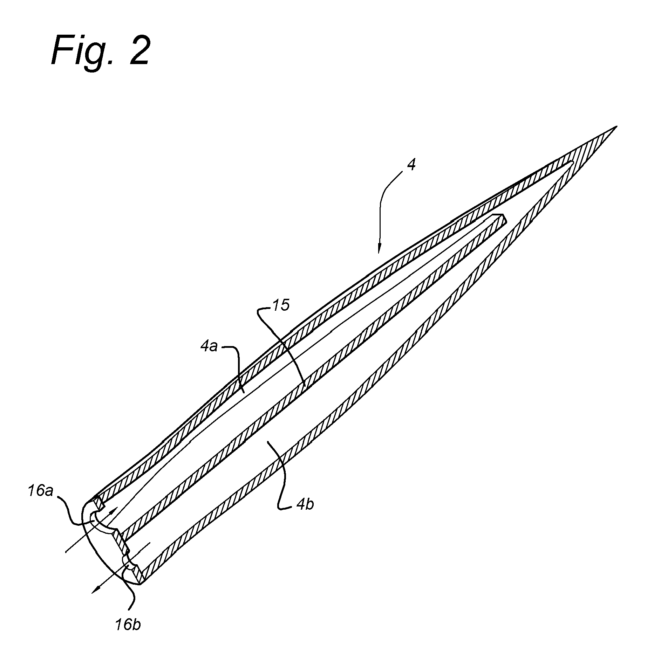

A standard turbine blade 4 is hollow on the inside and possibly divided into longitudinal chambers, as indicated in the cross sectional perspective view of Fig. 2. To create an airflow through a large part of the blade 4, the blade 4 should be partially divided by a separator element 15 (e.g. a structural wall) in the blade 4, creating two parts 4a, 4b in the interior of the blade 4. The blade 4 is provided with an inlet aperture 16a and outlet aperture 16b. In any one of the inlet or outlet aperture 16a, 16b the cooling fan 9 may be positioned.

Thus, in a further embodiment, a blade 4 of the wind turbine 1 is provided with a separator element 15, creating an elongated cooling duct part over a predetermined length L of the blade 4. The separator element 15 may be a structural part of the blade 4 (e.g. a so called shear web), and may already be present in an existing blade design. As an alternative the separator element 15 is implemented using a lightweight material (i.e. a non-blade-reinforcing material, e.g. cloth or thin sheets), which would allow additional benefits as the blade 4 can be constructed more lightweight than when using structural elements.

It is noted that the cooling system as presented here may also be limited to the rotor part 3 alone. This can e.g. be advantageously used to cool any electronic or mechanical components mounted on the rotor part 3, e.g. blade pitch equipment.

In an embodiment the cooling fan 9 is provided with power from an external power supply, which in many wind turbine designs is anyhow available in the rotor part 3. In a further embodiment, the cooling fan 9 is supplied with power from an auxiliary power unit (not shown) positioned inside the rotor part 3. This may be implemented using existing a coil/magnet type of electrical generator, as known in the art.

To further enhance the heat exchange capacity of the present cooling system, the stator part 2 is provided with a heat exhaust 17 (which can be an active or a passive heat exhaust. This heat exhaust 17 is e.g. positioned at the 12 o 'clock position of the wind turbine 1, as the heat intensity will be largest here during operation.

The present invention embodiments have been described above with reference to a number of exemplary embodiments as shown in the drawings. Modifications and alternative implementations of some parts or elements are possible, and are included in the scope of protection as defined in the appended claims.

## Claims

1. Cooling system for a wind turbine,
the wind turbine comprising a stator part (2) and a rotor part (3), wherein the rotor part (3) is rotating with respect to the stator part (2) in operation, and wherein the stator part (2) comprises generator stator components (5), and the rotor part (3) comprises generator rotor components,
wherein the cooling system is provided in the stator part (2) and the rotor part (3) of the wind turbine, the rotor part (3) comprises a cooling air channel (6) having at least one cooling aperture (7) in fluid communication with the generator stator components (5) in the stator part (2).

2. Cooling system according to claim 1, wherein the cooling air channel (6) forms a closed air circulation circuit, and the cooling air channel (6) has at least one inlet aperture (8) for allowing air to flow between the stator part (2) and the rotor part (3).

3. Cooling system according to claim 2, wherein the inlet aperture is provided by a central opening (8) between the stator part (2) and rotor part (3).

4. Cooling system according to claim 1, 2 or 3, wherein the generator stator components (5) comprise stator coil elements.

5. Cooling system according to any one of claims 1-4, wherein the rotor part (3) comprises a cooling fan (9) for circulating air in the cooling air channel (6).

6. Cooling system according to claim 5, wherein the cooling fan (9)is positioned in a blade (4) of the rotor part (3).

7. Cooling system according to claim 5 or 6, wherein each blade (4) of the wind turbine comprises a cooling fan (9) and associated air duct parts (9a).

8. Cooling system according to any one of claims 1-7, wherein the cooling air channel (6) is formed as an integral part of housing elements (12) of the rotor part (3).

9. Cooling system according to any one of claims 1-8, wherein the cooling air channel (6) is formed as an extending part (11) to the housing elements (12) of the rotor part.

10. Cooling system according to any one of claims 1-9, wherein the cooling air channel (6) comprises a radiator element.

11. Cooling system according to any one of claims 1-10, wherein a blade (4) of the wind turbine is provided with a separator element (15), creating an elongated cooling channel part (4a, 4b) over a predetermined length (L) of the blade (4).

12. Cooling system according to claim 11, wherein the separator element (15) is a structural part of the blade (4).

13. Cooling system according to claim 11, wherein the separator element (15) is implemented using a lightweight material.

14. Cooling system according to any one of claims 1-13, wherein the cooling fan (9) is supplied with power from an auxiliary power unit positioned inside the rotor part (3).

15. Cooling system according to any one of claims 1-14, wherein the stator part (2) is provided with a heat exhaust (17).
